# EUROPEAN PATENT SPECIFICATION

(11) **EP 0 945 056 B1**
(45) Date of publication and mention of the grant of the patent: **29.10.2003**
(21) Application number: 99200604.9
(22) Date of filing: 03.03.1999
(51) Int. Cl.: A01J 5/08

(54) **A milking member**
Melkvorrichtung
Outil de traite

(30) Priority: 23.03.1998 NL 1008671
(43) Date of publication of application: 29.09.1999
(60) Divisional application: 03076788.3
(73) Proprietor: MAASLAND N.V., 3155 PD Maasland (NL)
(72) Inventor: van den Berg, Karel, 2971 BR Bleskensgraaf (NL)
(74) Representative: Corten, Maurice Jean F.M.

(56) References cited:
- EP-A- 0 043 264
- EP-A- 0 534 565

## Description

The invention relates to a milking member according to the preamble of claim 1. The invention further relates to a milking robot provided with such a milking member.

In the European patent application EP-A-0043264 a milking member is described for automatic milking machines employing a vacuum milk line and a pulsating vacuum line. The member comprises a rigid outer shell and an elongate, tubular and flexible liner. A reinforcing band is fitted over the liner and bonded thereto. The band provides sufficient resiliency to restrain the upper portion of the inflation to prevent excessive expansion in the vicinity of the reinforcing band to prevent excessive teat penetration.

In a milking process with such a milking member the flexible liner each time collapses or is squeezed with the aid of air pressure in a release phase and is reopened in a subsequent suction phase. At collapsing, by deformation of the liner there are formed kinking points or places: parts of the liner where a sharp twist or bend in the material is formed. In the situation of an approximately cylindrical liner, there will usually be formed two kinking places that are located almost diametrically opposite each other on the circumference of the liner. The liner tends to form these kinking points each time at the same spots.

This has inter alia the disadvantage that the material of which the liner consists is each time heavily loaded at the same spots, which results in a quick wear at those places and may lead to a leak in the liner, so that the life of the relevant milking member is influenced in a negative manner.

The invention aims at obviating the above-mentioned drawbacks and at providing a milking member operating in a reliable manner and having a long life. According to the invention, this is achieved by the measures indicated in the characterizing part of claim 1. By altering the positions of the kinking places it is possible to prevent the latter from being formed each time at the same spots.

According to a further embodiment, the means are adapted to alter said positions periodically. This has the advantage that not only the load of the material of the liner is spread efficiently, but also that the teats of an animal to be milked are each time touched by the liner from an other direction, which has a stimulating, alternating massaging effect. According to a still further embodiment, the means are adapted to alter said positions at random.

In accordance with a further embodiment of the invention, the means comprise a disc which is provided with an oval or elongated aperture. According to a further embodiment, the means are adapted to rotate the disc (e.g. periodically). In this manner a simple and cheap embodiment is realized. For that purpose the means may comprise a toothing that is rigidly connected to the teat cup as well as at least one pushing element that is connected to the disc and cooperates with the toothing.

According to a further embodiment of the invention, the pushing element is a resilient pin or strip whose one end is connected to the disc and whose other end extends into the toothing. According to a further embodiment, the pin or strip is adapted, at squeezing of the liner, to be deformed by said liner substantially perpendicular to the longitudinal direction and thus to be put under tension.

In accordance with a further embodiment, one end of the pin or strip is connected to the disc via a bellows which is adapted to move the pin or strip substantially in longitudinal direction under the influence of the changes in pressure caused by the pulsation line. The disc may further be provided with apertures for air transmission.

According to a further embodiment, the means comprise an intermediate casing which is rotatably bearing-supported in the teat cup and connected to the liner, which intermediate casing may be provided on all sides with apertures at the level of the connection of the pulsation line.

In accordance with again another embodiment, the space between the outer wall of the teat cup and the liner is partially filled with a filling material. As a result the amount of fluid required for the pressure increase is smaller so that a smaller pulsation line will suffice.

According to a further embodiment, the filling material consists predominantly of a soft material, such as foam rubber or a soft synthetic material. According to a still further embodiment, the filling material is porous.

According to the invention the milking member can be applied in a very advantageous manner in an automatic milking implement or milking robot in which, of course, milking members are used intensively and almost continuously. The prevention of wear is of major importance in such an implement.

The invention will now be explained in further detail with reference to the accompanying drawings.
Figure 1 is a schematic longitudinal section of a first embodiment of the milking member;
Figure 2 is a schematic cross section of the milking member of Figure 1 taken on the line II - II;
Figure 3 is a schematic longitudinal section of a second embodiment of the milking member;
Figure 4 is a schematic cross section of the milking member of Figure 3 taken on the line IV - IV;
Figure 5 is a schematic longitudinal section of a third embodiment of the milking member;
Figure 6 is a schematic cross section of the milking member of Figure 5 taken on the line VI - VI, and
Figure 7 is a schematic cross section of a fourth embodiment of the milking member.

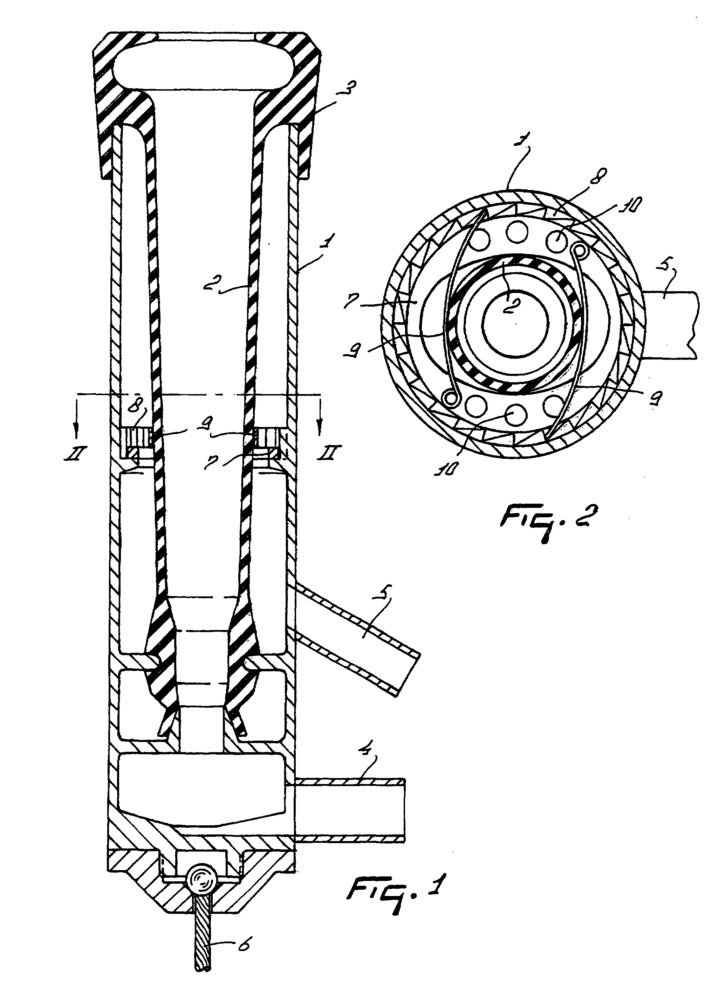

Figure 1 shows a schematic longitudinal section of a first embodiment of the milking member according to the invention. The milking member comprises a teat cup 1 for collecting and conveying the milk yielded, which teat cup 1 consists e.g. of metal or synthetic material and whose inner side is provided with a liner 2 whose upper side is connected to the teat cup 1 via a nozzle 3. The teat cup 1 is connected to a milk line 4 in which there is a permanent vacuum. Via this vacuum line 4 the milk is discharged from the teat cup 1 in order to be processed further. A pulsation line 5 is also connected to the teat cup 1 and is adapted to realize changes in pressure in the space between the outer wall of the teat cup 1 and the liner 2, by means of which at milking the flexible, deformable liner 2 repeatedly collapses or is squeezed in a release phase and is reopened in a subsequent suction phase. The teat cup 1 is further connected to a non-shown milking cluster or a robot arm via positioning means 6 known per se. The liner 2 is e.g. made of rubber and is substantially cylindrical or slightly conical.

At squeezing or collapsing, by deformation of the flexible liner 2 there are formed kinking points or places, i.e. parts of the liner 2 where a sharp twist or bend in the material is formed. In the situation of an approximately cylindrical liner 2, there will be formed two kinking places that are located approximately diametrically opposite each other on the circumference of the liner. Without further measures being taken the liner 2 would tend to form these kinking points each time at the same spots, which leads to early wear. According to the invention the milking member is provided with means for influencing the positions on the circumference of the liner 2 of kinking places which are formed in the liner 2 when it is squeezed. With the aid of these means, which will be further detailed in the following, the positions of the kinking points which are formed on the circumference of the liner 2 when it is squeezed can be altered. Altering each time the positions of the kinking places (i.e. changing the direction in which the liner 2 is squeezed) prevents the kinking places from being formed each time at the same spots.

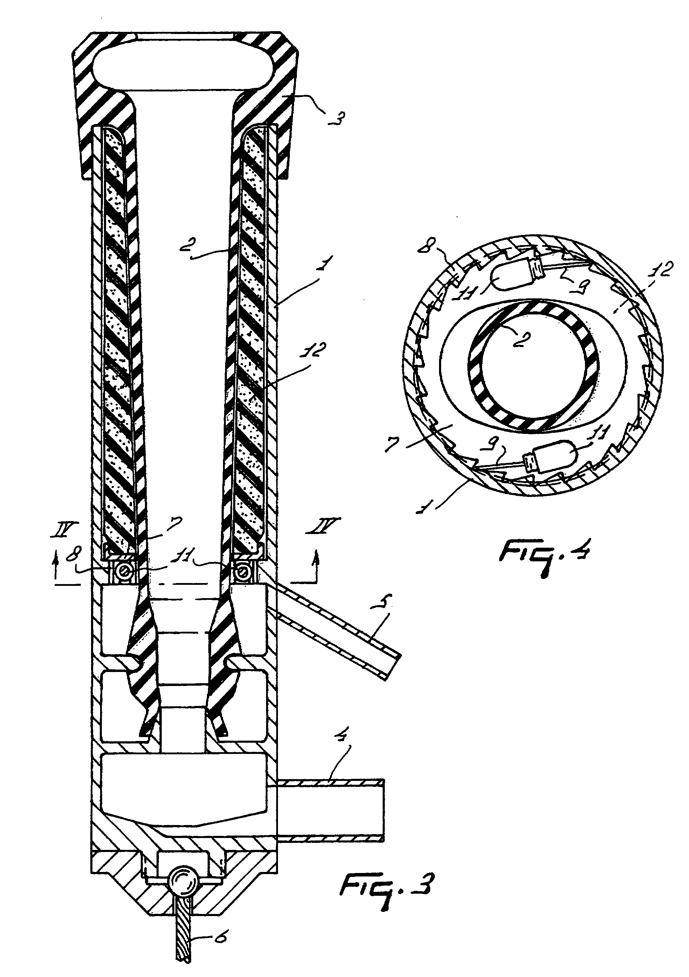

Figure 2 is a schematic cross section of the milking member of Figure 1 taken on the line II - II. In the embodiment of Figures 1 and 2 the means comprise a disc 7 which is provided in its centre with an oval or elongated aperture. The means are further adapted to rotate said disc 7 periodically. For that purpose the means comprise a toothing 8 that is rigidly connected to the teat cup 1, as well as at least one pushing element 9 that is connected to the disc 7 and -cooperates with the toothing 8. In the embodiment shown there are two pushing elements 9. The pushing elements 9 are each constituted by a resilient pin or strip (such as a leaf spring), whose one end is connected to the disc 7 and whose other end extends into the toothing 8.

The pin or strip 9 is adapted, at squeezing of the liner 2, to be deformed by said liner substantially perpendicular to the longitudinal direction of the pin or strip and thus to be put under tension. From the position of Figure 2, when being squeezed the liner 2 will bulge to the left and the right, so that the pushing elements 9 will be somewhat more curved and thus slightly be put under tension, while the end extending into the toothing 8 each time moves up a tine. When subsequently the liner reassumes the form and position shown in Figure 2, the pin or strip 9 will release, so that the disc 7 is rotated somewhat in the direction of the arrow shown in Figure 2. In a next suction phase the process is repeated, so that the disc 7 is each time rotated further. Of course, the oval aperture in the disc 7 rotates along, so that the direction in which the liner 2 is allowed to bulge each time changes. Around its central aperture the disc 7 is furthermore provided with apertures 10 for air transmission.

With the aid of the described construction the positions of the kinking places in the liner 2 are altered periodically (each time before a suction phase). In this manner not only the load of the material of the liner 2 is spread efficiently, but milking a teat will also entail a stimulating, massaging effect because the teat is slightly squeezed by the liner 2, each time from an other direction.

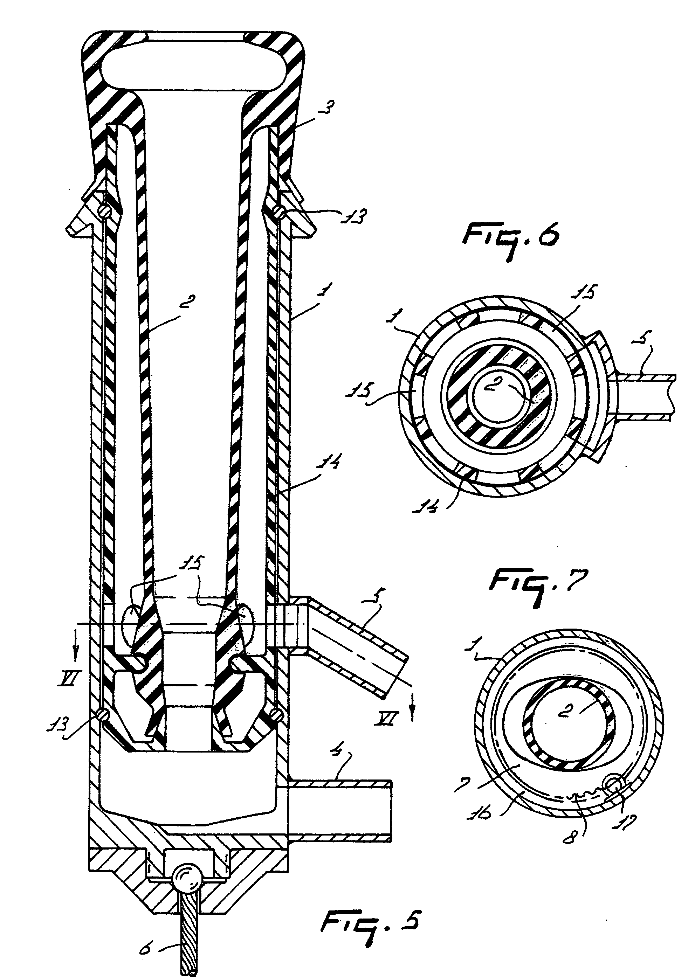

Figure 3 is a schematic longitudinal section of a second embodiment of the milking member and Figure 4 is a schematic cross section of the milking member of Figure 3 taken on the line IV - IV. The disc 7 provided with an oval aperture again comprises two pushing elements 9 which are now each constituted by a casing fixed on the disc 7 and accommodating a closed bellows or balloon 11 one end of which is provided with a slightly resilient pin or strip (such as a leaf spring) whose end extends into the toothing 8 that is rigidly connected to the teat cup 1.

The bellows 11 is adapted to move the pin or strip substantially in longitudinal direction under the influence of the changes in pressure caused by the pulsation line 5. From the position shown in Figure 4, at increasing the pressure with the aid of the pulsation line 5, not only the liner 2 will collapse, but the bellows 11 will withdraw the pin or strip 9 whose end will be inserted into a next tine of the toothing 8 because of the slightly resilient effect of the pin or strip. When, at decreasing the pressure the liner 2 subsequently reassumes the form and position shown in Figure 4, the pressure in the bellows 11 will ensure that the pin or strip 9 will be stretched out again, so that the disc 7 is rotated somewhat in the direction of the arrow shown in Figure 4. In a next suction phase this process is repeated, so that the disc 7 is each time rotated further. Of course, the oval aperture in the disc 7 rotates along, so that the direction in which the liner 2 can bulge each time changes. Around its central aperture the disc 7 may again be provided with apertures 10 for air transmission.

The space between the outer wall of the teat cup 1 and the liner 2 can partially be filled with a filling material 12. Consequently the amount of fluid required for the increase and decrease of pressure is smaller, so that a smaller pulsation line 5 will suffice. Preferably the filling material 12 consists substantially of a soft material, such as foam rubber or a soft synthetic material. The filling material 12 may also be porous.

Figure 5 is a schematic longitudinal section of a third embodiment of the milking member and Figure 6 is a schematic cross section of the milking member of Figure 5 taken on the line VI - VI. In this embodiment the means comprise an intermediate casing 14 which is rotatably bearing-supported in the teat cup 1 with the aid of bearings 13 and which is rotatable as a whole, e.g. by means of a (non-shown) cleaning device which is connectable to the nozzle 3 of the teat cup 1. At the level of the connection of the pulsation line 5 the intermediate casing 14 is provided on all sides with apertures 15, so that the space between the liner 2 and the intermediate casing 14 is constantly in connection with the pulsation line 5. Consequently, in this embodiment the liner 2 is rotated as a whole at each cleaning run, so that the position of the kinking places which are formed is influenced. Of course, also in this situation the space between the intermediate casing 14 and the liner 2 can partially be filled with a filling material 12.

Figure 7 is a schematic cross section of a fourth embodiment of the milking member. In this embodiment it is possible to determine at random where the kinking places of the liner 2 will be formed. In the cross section of Figure 7 there is shown a teat cup 1 which roughly equals the teat cup 1 represented in Figure 3. The teat cup 1 comprises a bearing edge 16 on which a disc 7 provided with an oval aperture is rotatably disposed. The disc 7 comprises a toothing 8 that engages with a gear wheel of a motor 17 and is rigidly connected to the liner of the teat cup 1. In this situation the motor 17 can be designed e.g. as an electric motor or a pneumatic motor. During operation there is determined a value by means of a (non-shown) random generator, which value corresponds to a certain period of time during which the motor 17 is energized. Depending on the time during which the motor 17 is energized, the disc 7 will undergo a certain angular rotation. The value each time being determined at random, it is never certain where the kinking places of the liner 2 will be formed. With the latter measure it is achieved that the animal does not get accustomed to a certain rhythm in the formation of the kinking places. Determining the kinking place at random has the advantage that the teat is additionally stimulated.

## Claims

1. A milking member for milking a teat of an animal to be milked, which milking member comprises a teat cup (1) that is connectable to a milk line (4), which teat cup is provided with a flexible, deformable liner (2) which is adapted to be alternately squeezed and reopened by means of changes in pressure to be realized by a pulsation line (5) that can also be connected to the teat cup (1), said milking member is provided with means (7, 8, 9; 11; 13, 14) for influencing the positions on the circumference of the liner (2) of kinking places that are formed in the liner (2) when it is squeezed, **characterized in that** the means (7, 8, 9; 11; 13, 14) are adapted to alter said positions.

2. A milking member as claimed in claim 1, **characterized in that** the means (7, 8, 9; 11; 13, 14) are adapted to prevent said kinking places from being formed each time at the same spots.

3. A milking member as claimed in claim 1 or 2, **characterized in that** the means (7, 8, 9; 11; 13, 14) are adapted to alter said positions periodically.

4. A milking member as claimed in any one of claims 1 - 3, **characterized in that** the means (13, 14) are adapted to alter said positions at random.

5. A milking member as claimed in any one of claims 1 - 4, **characterized in that** the means (7, 8, 9; 11; 13, 14) comprise a disc (7) which is provided with an oval or elongated aperture.

6. A milking member as claimed in claim 5, **characterized in that** the means (7, 8, 9; 11; 13, 14) are adapted to rotate the disc (7).

7. A milking member as claimed in claim 6, **characterized in that** the means (7, 8, 9; 11; 13, 14) comprise a toothing (8) that is rigidly connected to the teat cup, as well as at least one pushing element (9) that is connected to the disc (7) and cooperates with the toothing (8).

8. A milking member as claimed in claim 7, **characterized in that** the pushing element (9) is a resilient pin or strip whose one end is connected to the disc (7) and whose other end extends into the toothing (8).

9. A milking member as claimed in claim 8, **characterized in that** the pin or strip (9) is adapted, at squeezing of the liner (2), to be deformed by said liner (2) substantially perpendicular to the longitudinal direction and thus to be put under tension.

10. A milking member as claimed in claim 8, **characterized in that** one end of the pin or strip (9) is connected to the disc (7) via a bellows or balloon (11) which is adapted to move the pin or strip (9) substantially in longitudinal direction under the influence of the changes in pressure caused by the pulsation line (5).

11. A milking member as claimed in any one of claims 5 - 10, **characterized in that** the disc (7) is further provided with apertures (10) for air transmission.

12. A milking member as claimed in any one of claims 1 - 11, **characterized in that** the means (7, 8, 9; 11; 13, 14) comprise an intermediate casing (14) which is rotatably bearing-supported in the teat cup (1) and connected to the liner (2).

13. A milking member as claimed in claim 12, **characterized in that** the intermediate casing (14) is provided on all sides with apertures (15) at the level of the connection of the pulsation line (5).

14. A milking member as claimed in any one of claims 1 - 13, **characterized in that** the space between the outer wall of the teat cup (1) and the liner (2) is partially filled with a filling material (12).

15. A milking member as claimed in claim 14, **characterized in that** the filling material (12) consists predominantly of a soft material, such as foam rubber or a soft synthetic material.

16. A milking member as claimed in claim 14 or 15, **characterized in that** the filling material (12) is porous.

17. A milking robot provided with a milking member as claimed in any one of claims 1 - 16.

## Patentansprüche

1. Melkglied zum Melken einer Zitze eines zu melkenden Tieres, wobei das Melkglied einen Zitzenbecher (1) umfaßt, der an eine Milchleitung (4) anschließbar ist, wobei der Zitzenbecher mit einer flexiblen, verformbaren Auskleidung (2) versehen ist, die geeignet ist, abwechselnd zusammengedrückt und wieder geöffnet zu werden mit Hilfe von Druckänderungen, die von einer Pulsierleitung (5) zu erzeugen sind, welche ebenfalls an den Zitzenbecher (1) angeschlossen werden kann, wobei das Melkglied mit Vorrichtungen (7, 8, 9; 11; 13, 14) versehen ist, um am Umfang der Auskleidung (2) die Positionen von Knickstellen zu beeinflussen, die beim Zusammendrücken in der Auskleidung (2) entstehen,
**dadurch gekennzeichnet, daß** die Vorrichtungen (7, 8, 9; 11; 13, 14) geeignet sind, diese Positionen zu verändern.

2. Melkglied nach Anspruch 1,
**dadurch gekennzeichnet, daß** die Vorrichtungen (7, 8, 9; 11; 13, 14) derart ausgebildet sind, daß sie verhindern, daß die Knickstellen jedesmal an denselben Stellen entstehen.

3. Melkglied nach Anspruch 1 oder 2,
**dadurch gekennzeichnet, daß** die Vorrichtungen (7, 8, 9; 11; 13, 14) geeignet sind, diese Positionen in regelmäßigen Abständen zu verändern.

4. Melkglied nach einem der Ansprüche 1 bis 3,
**dadurch gekennzeichnet, daß** die Vorrichtungen (13, 14) geeignet sind, diese Positionen willkürlich zu verändern.

5. Melkglied nach einem der Ansprüche 1 bis 4,
**dadurch gekennzeichnet, daß** die Vorrichtungen (7, 8, 9; 11; 13, 14) eine Scheibe (7) umfassen, die mit einer ovalen oder länglichen Öffnung versehen ist.

6. Melkglied nach Anspruch 5,
**dadurch gekennzeichnet, daß** die Vorrichtungen (7, 8, 9; 11; 13, 14) geeignet sind, die Scheibe (7) zu drehen.

7. Melkglied nach Anspruch 6,
**dadurch gekennzeichnet, daß** die Vorrichtungen (7, 8, 9; 11; 13, 14) eine Zahnung (8) umfassen, die starr mit dem Zitzenbecher verbunden ist, sowie mindestens ein Druckelement (9), das mit der Scheibe (7) verbunden ist und mit der Zahnung (8) zusammenwirkt.

8. Melkglied nach Anspruch 7,
**dadurch gekennzeichnet, daß** das Druckelement (9) ein elastischer Stift oder Streifen ist, dessen eines Ende mit der Scheibe (7) verbunden ist und dessen anderes Ende sich in die Zahnung (8) erstreckt.

9. Melkglied nach Anspruch 8,
**dadurch gekennzeichnet, daß** der Stift oder Streifen (9) geeignet ist, beim Zusammendrücken der Auskleidung (2) von der Auskleidung (2) im wesentlichen rechtwinklig zur Längsrichtung verformt und dadurch mit Spannung beaufschlagt zu werden.

10. Melkglied nach Anspruch 8,
**dadurch gekennzeichnet, daß** ein Ende des Stiftes oder Streifens (9) mit der Scheibe (7) über einen Faltenbalg oder Ballon (11) verbunden ist, der geeignet ist, den Stift oder Streifen (9) unter dem Einfluß der durch die Pulsierleitung (5) verursachten Druckänderungen im wesentlichen in Längsrichtung zu bewegen.

11. Melkglied nach einem der Ansprüche 5 bis 10,
**dadurch gekennzeichnet, daß** die Scheibe (7) ferner mit Öffnungen (10) zum Durchtritt von Luft versehen ist.

12. Melkglied nach einem der Ansprüche 1 bis 11,
**dadurch gekennzeichnet, daß** die Vorrichtungen (7, 8, 9; 11; 13, 14) ein Zwischengehäuse (14) umfassen, das in dem Zitzenbecher (1) drehbar gelagert und gehalten und mit der Auskleidung (2) verbunden ist.

13. Melkglied nach Anspruch 12,
**dadurch gekennzeichnet, daß** das Zwischengehäuse (14) in Höhe des Anschlusses der Pulsierleitung (5) an allen Seiten mit Öffnungen (15) versehen ist.

14. Melkglied nach einem der Ansprüche 1 bis 13,
**dadurch gekennzeichnet, daß** der Raum zwischen der Außenwand des Zitzenbechers (1) und der Auskleidung (2) teilweise mit einem Füllmaterial (12) gefüllt ist.

15. Melkglied nach Anspruch 14,
**dadurch gekennzeichnet, daß** das Füllmaterial (12) überwiegend aus weichem Material, wie z. B. Schaumgummi oder weichem Kunststoff, besteht.

16. Melkglied nach Anspruch 14 oder 15,
**dadurch gekennzeichnet, daß** das Füllmaterial (12) porös ist.

17. Melkroboter mit einem Melkglied nach einem der Ansprüche 1 bis 16.

## Revendications

1. Outil de traite destiné à traire un trayon d'un animal devant être trait, lequel outil comprend un gobelet trayeur (1) qui peut être relié à une ligne de traite (4), lequel gobelet trayeur est pourvu d'un manchon (2) flexible, déformable qui est adapté pour être alternativement pressé et rouvert à l'aide de changements de pression devant être réalisés par une ligne de pulsation (5) qui peut également être reliée au gobelet trayeur (1), ledit outil de traite étant pourvu de moyens (7, 8, 9 ; 11 ; 13, 14) pour influer sur les emplacements des points de pliure à la circonférence du manchon (2) qui sont formés dans le manchon (2) lorsqu'il est pressé, **caractérisé en ce que** les moyens (7, 8, 9 ; 11 ; 13, 14) sont adaptés pour changer lesdits emplacements.

2. Outil de traite selon la revendication 1, **caractérisé en ce que** les moyens (7, 8, 9 ; 11 ; 13, 14) sont adaptés pour empêcher lesdits points de pliure d'être formés chaque fois aux mêmes endroits.

3. Outil de traite selon la revendication 1 ou 2, **caractérisé en ce que** les moyens (7, 8, 9 ; 11 ; 13, 14) sont adaptés pour changer lesdits emplacements périodiquement.

4. Outil de traite selon l'une quelconque des revendications 1-3, **caractérisé en ce que** les moyens (13, 14) sont adaptés pour changer lesdits emplacements au hasard.

5. Outil de traite selon l'une quelconque des revendications 1-3, **caractérisé en ce que** les moyens (7, 8, 9 ; 11 ; 13, 14) comprennent un disque (7) qui est pourvu d'une ouverture ovale ou allongée.

6. Outil de traite selon la revendication 5, **caractérisé en ce que** les moyens (7, 8, 9 ; 11 ; 13, 14) sont adaptés pour faire tourner le disque (7).

7. Outil de traite selon la revendication 6, **caractérisé en ce que** les moyens (7, 8, 9 ; 11 ; 13, 14) comprennent une denture (8) qui est reliée de manière rigide au gobelet trayeur, ainsi qu'à au moins un élément de poussée (9) qui est relié au disque (7) et coopère avec la denture (8).

8. Outil de traite selon la revendication 7, **caractérisé en ce que** l'élément de poussée (9) est une goupille ou une bande élastique dont une extrémité est reliée au disque (7) et dont l'autre extrémité s'étend dans la denture (8).

9. Outil de traite selon la revendication 8, **caractérisé en ce que** la goupille ou la bande (9) est adaptée, lors de la pression du manchon trayeur (2), pour être déformée par ledit manchon trayeur (2) sensiblement de manière perpendiculaire à la direction longitudinale et d'être ainsi mise sous tension.

10. Outil de traite selon la revendication 8, **caractérisé en ce qu'**une extrémité de la goupille ou de la bande (9) est reliée au disque (7) via un soufflet ou un ballon (11) qui est adapté pour déplacer la goupille ou la bande (9) sensiblement dans la direction longitudinale sous l'influence des changements de pression provoqués par le pulsateur (5).

11. Outil de traite selon l'une quelconque des revendications 5-10, **caractérisé en ce que** le disque (7) est en outre pourvu d'ouvertures (10) pour la transmission d'air.

12. Outil de traite selon l'une quelconque des revendications 1-11, **caractérisé en ce que** les moyens (7, 8, 9 ; 11 ; 13, 14) comprennent un corps intermédiaire (14) qui est supporté dans le gobelet trayeur par un palier de manière à pouvoir tourner et relié au manchon (2).

13. Outil de traite selon la revendication 12, **caractérisé en ce que** le corps intermédiaire (14) est pourvu sur tous ses côtés d'ouvertures (15) au niveau de la liaison du pulsateur (5).

14. Outil de traite selon l'une quelconque des revendications 1-13, **caractérisé en ce que** l'espace entre la paroi extérieure du gobelet trayeur (1) et du pulsateur (2) est partiellement rempli d'un matériau de remplissage (12).

15. Outil de traite selon la revendication 14, **caractérisé en ce que** le matériau de remplissage (12) se compose de manière prédominante d'un corps mou, tel que du caoutchouc mousse ou une matière synthétique molle.

16. Outil de traite selon la revendication 14 ou 15, **caractérisé en ce que** le matériau de remplissage (12) est poreux.

17. Robot de traite fourni avec un outil de traite selon l'une quelconque des revendications 1-16.
